# EUROPEAN PATENT APPLICATION

(11) **EP 1 758 349 A2**
(43) Date of publication of application: **28.02.2007**
(21) Application number: 06118890.0
(22) Date of filing: 14.08.2006
(51) Int. Cl.: H04M 1/247

(54) **Apparatus and method of user interface in a mobile communication terminal**

(30) Priority: 23.08.2005 KR 20050077232
(71) Applicant: Samsung Electronics Co., Ltd., Suwon-si, Gyeonggi-Do (KR)
(72) Inventor: Seo, Jae-Hun, Paldal-gu, Gyeonggi-do (KR); Hwang, Byeong-Cheol, Seocho-gu, Seoul (KR)
(74) Representative: Grünecker, Kinkeldey, Stockmair & Schwanhäusser Anwaltssozietät

(57) **Abstract**

The present invention relates to a method of providing user interface in a portable or mobile communication terminal. A function of a first menu is displayed on a display unit when a sub body is in an open position. The function is carried out when a function performing key is pressed. It is moved to next menu when a menu transfer key is pressed and one contents among contents stored in the next menu is displayed.

## Description

The present invention relates to an apparatus and a method of user interface in a mobile communication terminal.

Mobile communication terminals are widely used due to their convenient portability. Mobile communication terminal manufacturers are developing mobile communication terminals having more convenient functions. For example, the mobile communication terminals provide various functions including, but not limited to, a phone book, a game, a scheduler, a short message, an internet, an e-mail, an alarm, a MPEG Layer-3 and a digital camera.

As stated above, mobile communication terminals provide increasingly more functions. However, some people of silver generations do not tend to use all of the available functions. They generally tend to use the call connection function and some additional functions, such as an emergency call 911 or a photo album function. Accordingly, the various functions may be unnecessary for them.

Recently, the so-called 'silver phone', a conventional phone for the silver generation, has been developed and commercialized. However, the silver phone for the silver generation is designed by only enlarging its physical font size. Thus, there is no remarkable difference between the conventional phone for the silver generation and the phone for general users in view of usability and function. The conventional silver phone is not based on physical and cognitive usability by understanding characteristic of the silver generation. Therefore, it provides inconvenient and complex user interface to people who are old-aged or have impaired cognitive functions due to the infirmities or troubles.

Accordingly, it is the object of the present invention to provide a method and portable terminal having an improved interface.

This object is solved by the subject matter of the independent claims.

Preferred embodiments are defined in the dependent claims.

In an embodiment, the present invention provides a method of providing user interface for people having less sensitive cognitive functions in a portable or mobile communication terminal, and a corresponding terminal.

Another embodiment of the present invention relates to a method of providing linear interactive user interface allowing a user to select a YES or a NO command in a portable or mobile communication terminal, and to a corresponding terminal.

In accordance with an aspect of the present invention for achieving above objects, there is provided a method of providing user interface in a mobile communication terminal that includes displaying a function of a first menu on a display unit when a sub body is in an open position; when a function performing key is pressed executing the function; when a menu transfer key is pressed and one of contents stored in a next menu is displayed moving the function to the next menu; and when a list transfer key is pressed displaying the previous or next stored contents of the present menu.

The above and other objects, features, and advantages of the present invention will become more apparent from the following detailed description when taken in conjunction with the accompanying drawings in which:
FIG. 1 is a block diagram schematically illustrating a mobile communication terminal according to the present invention;
FIGs. 2A and 2B are illustrations depicting a keypad in a mobile communication terminal according to the present invention;
FIGs. 2C and 2D are illustrations depicting a volume up/down key in a mobile communication terminal according to the present invention;
FIG. 3 is a flowchart diagram illustrating a method of providing user interface in a mobile communication terminal according to the present invention;
FIG. 4 illustrates a flow of menu in a mobile communication terminal according to the present invention;
FIG. 5 illustrates a flow of an outgoing call in a mobile communication terminal according to the present invention;
FIG. 6 illustrates a phone book in a mobile communication terminal according to the present invention;
FIG. 7 illustrates a flow of incoming call in a mobile communication terminal according to the present invention;
FIG. 8 illustrates a flow of recent call list in a mobile communication terminal according to the present invention;
FIG. 9 is an illustration of showing a procedure of checking a new received message in a mobile communication terminal according to the present invention;
FIG. 10 is an illustration showing a procedure of transmitting a reply message in a mobile communication terminal according to the present invention;
FIG. 11 is an illustration showing a procedure of deleting a message in a mobile communication terminal according to the present invention;
FIG. 12 is an illustration showing reception of voice mail in a mobile communication terminal according to the present invention; and
FIG. 13 is an illustration showing a process of setting a background image in a mobile communication terminal according to the present invention.

Preferred embodiments of the present invention will be described herein below with reference to the accompanying drawings. In the following description, well-known functions or constructions are not described in detail because they would obscure the present invention in unnecessary detail.

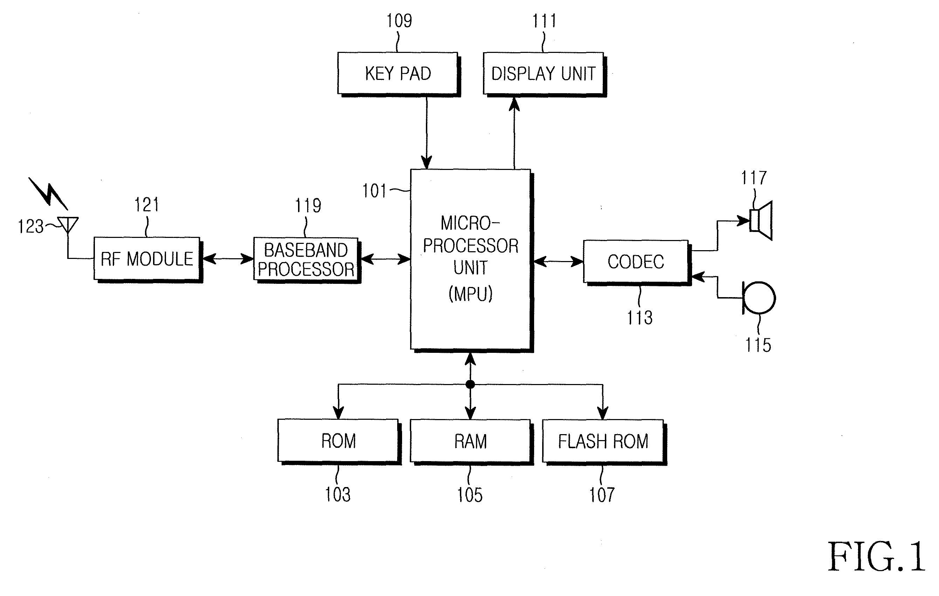

FIG. 1 is a block diagram schematically illustrating a mobile communication terminal according to the present invention. The mobile communication terminal includes a cellular phone, a Personal Communication System (PCS), a Personal Data Assistant (PDA) or International Mobile Telecommunication-2000 (IMT2000).

Referring to FIG. 1, a Micro-Processor Unit (MPU) 101 controls an overall operation of the mobile communication terminal. For example, the MPU 101 is responsible for providing user interface functions. A detailed description of the typical processing and controlling operation of the MPU 101 will not be described herein.

Read Only Memory (ROM) 103 stores a microcode of a program for processing and controlling the MPU and all reference data. A Random Access Memory (RAM) 105, which is a working memory of the MPU, stores temporary data being generated while performing all programs. A flash ROM 107 stores various updatable data, such as a phone book, an outgoing message and an incoming message.

A display unit 111 displays status information, a restricted number of characters, moving pictures and still pictures and the like. The display unit 111 can be a color Liquid Crystal Display. (LCD) In addition to typical functions, the display unit 111 displays a title of the corresponding menu in a top area. In a middle area of same, contents of the first one among the lists stored in the corresponding menu are displayed. Also, the display unit 111 displays a function" such as "Call connection?", "Deletion?", "Disconnection?" and the like in command area.

A Coder-Decoder (CODEC) 113 connected to the MPU 101, a microphone 115, and a speaker 117 connected to the CODEC 113 are audio input/output blocks for use in voice communication. The MPU 101 produces Pulse Code Modulation (PCM) data and the CODEC 113 converts the PCM data into analog audio signals. The analog audio signals are outputted through the speaker 117. Also, the CODEC 113 converts analog audio signals received through the microphone 115 into PCM data and provides the PCM data to the MPU 101.

Radio Frequency (RF) Module 121 decreases a frequency of an RF signal received through an antenna 123 and provides the RF signal to a baseband processor 119. Also, the RF Module 121 increases a frequency of a baseband signal provided from the baseband processor 119, transmits the baseband signals through the antenna 123. The baseband processor 119 processes the baseband signals which are transmitted/received between the RF Module 121 and the MPU 101. For example, in case of the data transmission, the baseband processor 119 performs spreading and channel coding for data transmission. In case of the data reception, the baseband processor 119 performs despreading and channel decoding for reception data.

A key pad 109 includes up/down/left/right navigation keys (▲/▼/◄/►), an operator key, a tow key, a 911 key and volume up/down keys. The key input data corresponding to a key pressed by the user is transmitted to the MPU 101.

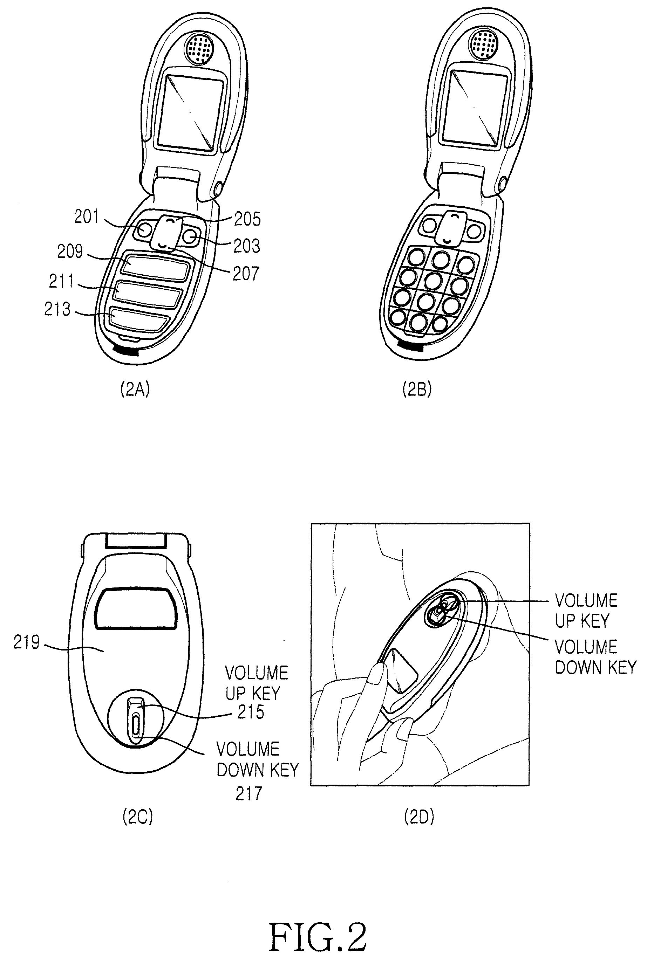

FIGs. 2A and 2B are illustrations depicting a key pad in a mobile communication terminal according to the present invention. FIG. 2A and FIG. 2B show elements of the key pad. A left soft key 201 represents "Yes" to perform a function displayed in command area of the display unit 111. A right soft key 203 represents "No" not to perform the function and also to move to next menu. The up key 205 and down key 207 move element of the present menu displayed on the display unit 111 to previous or next element. The operator key 209 connects to an operator. A user can connect to the operator by pressing the operator key 209.When if the user wants to call a telephone number which is not stored in a mobile terminal, the user can request the operator to call by using the operator key 209. The tow key 211 can connect a call to one number designated by the user. The 911 key 213 can connect a call to the 911 emergency services.

FIG. 2b shows a key pad including a left soft key, a right soft key and numeric keys of digits 0-9.

FIG. 2c shows a volume up key 215 and a volume down key 217 which is operated for speaker volume up/down in call connection mode and ringtone volume up/down in call disconnection mode. The volume up key 215 and the volume down key 217 are disposed at a outerside of the subbody 219 as shown. When the sub body is in an open position, the volume up key 215 is automatically changed to volume down key and the volume down key 217 is automatically changed to volume up key respectively as shown in FIG. 2d.

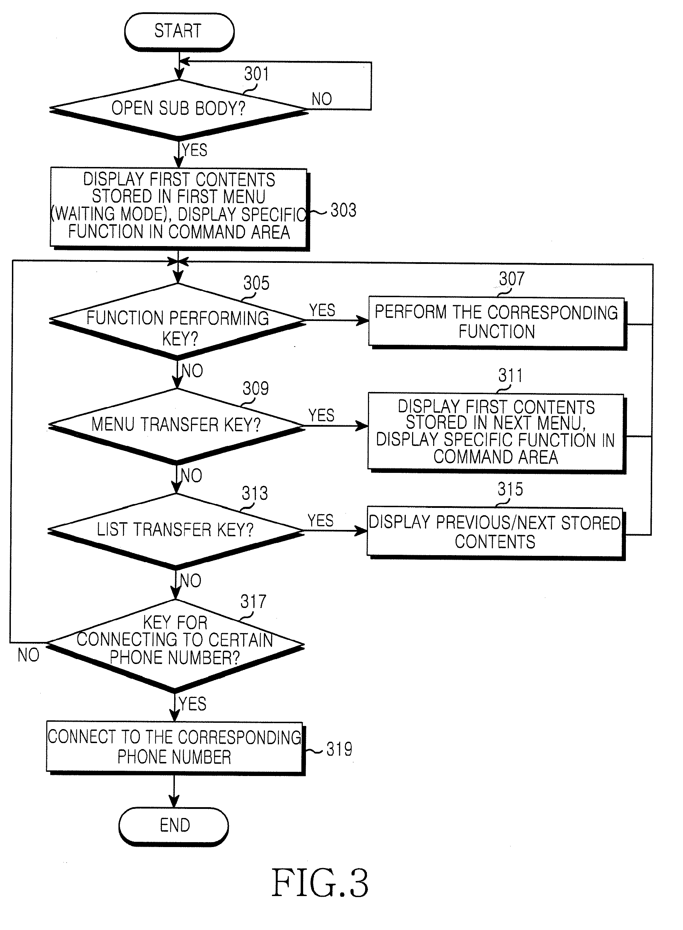

FIG. 3 is a flowchart diagram illustrating a method of providing user interface for silver generations in a mobile communication terminal according to the present invention.

Referring to FIG. 3, the MPU 101 checks whether a sub body is in an opened state in step 301. When the sub body is in the open position, the MPU proceeds to step 303 to control displaying a first stored contents of a first menu on a display unit 111. That is, the first stored contents of the first menu displayed on the display unit 111 are a waiting mode. At this time, the MPU 101 notifies a user of making a call available by feeding back a sound of "Ddoo...". In addition, a specific function is displayed in command area of the display unit 111 and it allows the user to select either "Yes" or "No".

After this, the MPU 101 checks whether there is key input for performing the function displayed in the command area. When the function performing key is pressed in step 305, the MPU 101 proceeds to step 307 to perform the corresponding function and returns to step 305. For example, when the first menu includes 'phone book' and the sub body is in the open position the name and telephone number corresponding to No. 1 in the phone book are displayed on the display unit 111. Also, "call connection" function is displayed in the command area of the display unit 111. If the user presses the function performing key, the user can call the corresponding telephone number displayed on the display unit 111. Here, the function performing key may be implemented as a left key.

If the function performing key is not pressed, the MPU 101 checks whether there is key input for menu transfer in step 309. If there is the key input for menu transfer, the MPU 101 proceeds to step 311 to control displaying a first contents stored in next menu on the display unit 111 and displaying a function in the command area of the display unit 111, and return to step 305. Here, the menu transfer key may be implemented as a right key.

If the menu transfer key is not pressed, the MPU 101 checks whether there is key input for list transfer in step 313. If there is the key input for list transfer, the MPU 101 proceeds to step 315 to change contents stored in the corresponding menu displayed on the display unit 111. For example, the list transfer key can be implemented as up/down keys, and thus, previous or next contents can be displayed.

If the list transfer key is not pressed, the MPU 101 checks whether there is key input for connecting to a telephone number in step 317. Here, a key for connecting to the telephone number includes an operator key, a tow key, 911 key and so on. The user can request an operator to call by using the operator key 209 in order to call any telephone number which is not stored in the phone book. The tow key 211 can connect a call to one number designated by the user. The 911 key 213 can connect a call to the emergency services 911. If there is no key input for connecting the telephone number, the MPU 101 returns to step 305. If there is key input for connecting the telephone number, the MPU 101 proceeds to step 319 to connect a call to the number mapped by the key, and ends this algorithm.

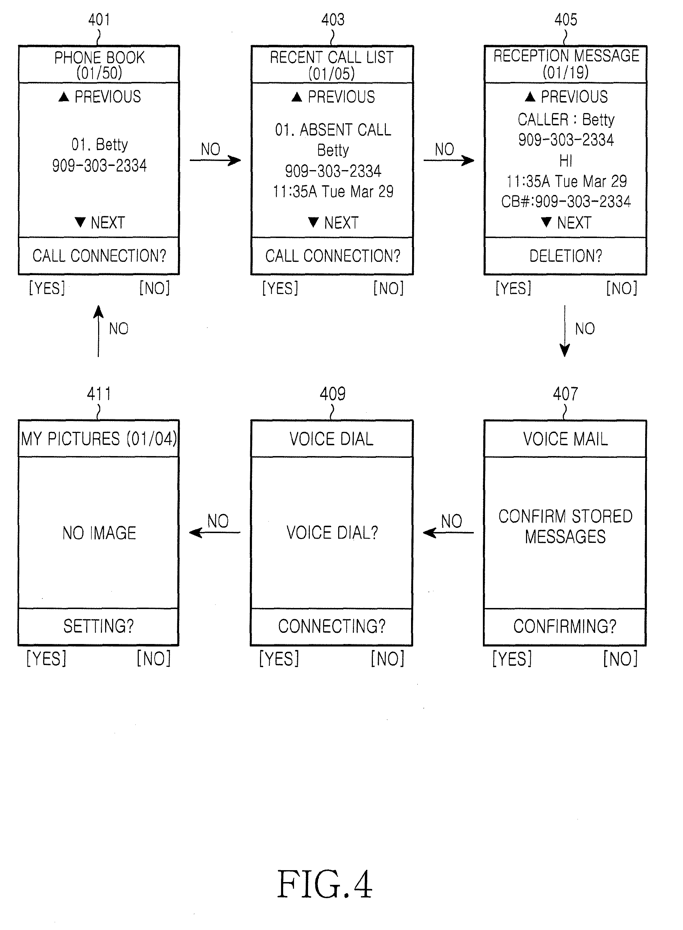

FIG. 4 illustrates a flow of menu in a mobile communication terminal according to the present invention. Here, the menu includes, but is not limited to, a phone book 401; a recent call list 403, a reception message 405, a voice mail 407, a voice dial 409, and My Pictures 411. When a sub body is in the open position, the phone book 401 is displayed on the display unit 111. All menus in the terminal are made to rotate. At this time, each menu is moved with the right key and the menu is returned to the first menu if the right key is pressed in the last menu.

Here, a title of each menu is displayed on the top portion of the display unit 111. In the middle area, contents of the first menu among the lists stored in the corresponding list are displayed. At this time, the order of the contents displayed in the middle area can be displayed adjacent to the title of the menu. The title can disappear after a predetermined time. Up/down keys along with the contents of the list are displayed in the middle area of the display unit so as to inform a user of the existence of previous/next lists and being able to use them to read the contents of the previous/next lists. A command area is displayed in the bottom portion of the display unit 111. The command area is used to require a certain function, such as "Call connection?", "Deletion?" and "Disconnection?". As the reply to the function displayed in the command area, an affirmative answer "Yes" is selected by using a left key, a negative answer "No" is selected by using a right key.

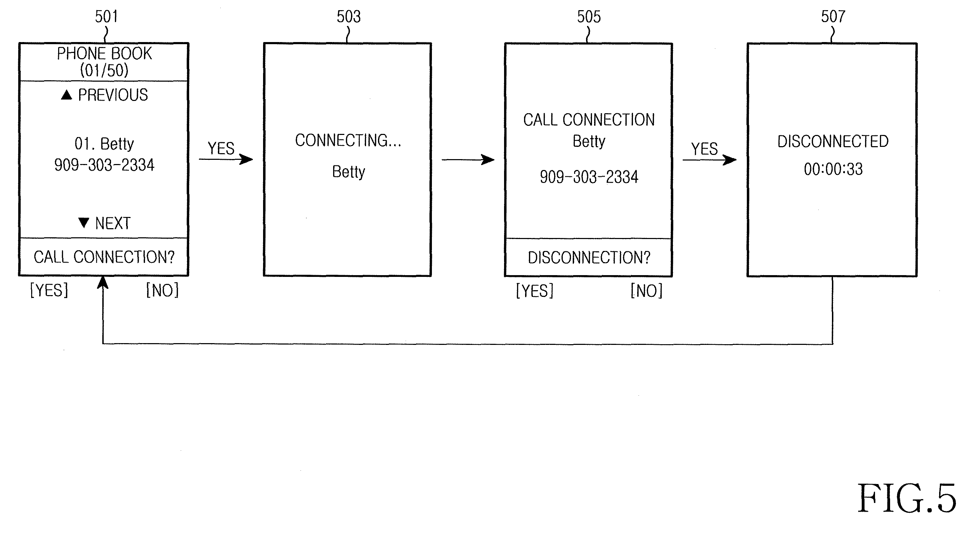

FIG. 5 illustrates a flow of outgoing call in a mobile communication terminal according to the present invention. If a user presses a left key when a predetermined phone number 501 is displayed in the display unit 111, call connection to the phone number is attempted 503 after a predetermined time, e.g., two seconds, at the same time, the terminal generates dial tone. Following which, if the call connection has been completed, the user commences to speak to a person 505. The command area of the display unit 111 includes a message of "Disconnection?". The user can disconnect the call by pressing the left key. At this time, the display unit 111 can display a total of call time and display a first menu of the terminal after a predetermined time.

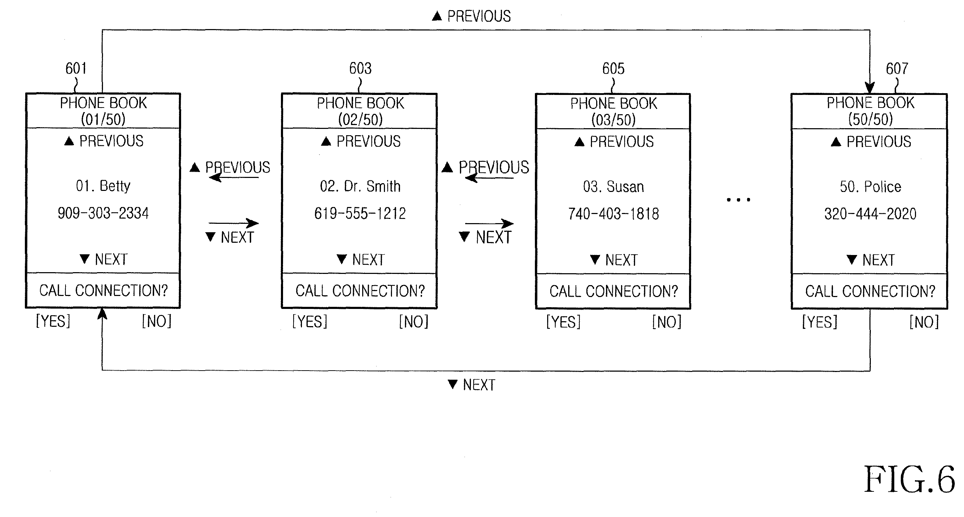

FIG. 6 illustrates a phone book in a mobile communication terminal according to the present invention. Referring to FIG. 6, at least fifty phone numbers are stored and a first phone number 601 is "01. Betty 909-303-2334". Here, if a down key is inputted, "02. Dr. Smith 619-555-1212" which is a second phone number 603 is displayed on the display unit 111. If the down key is pressed, "03. Susan 740-403-1818" which is a third phone number is displayed. If the up key is pressed while displaying the first phone number 601, "50. Police 320-444-2020" which is the last phone number stored in the phone book is displayed.

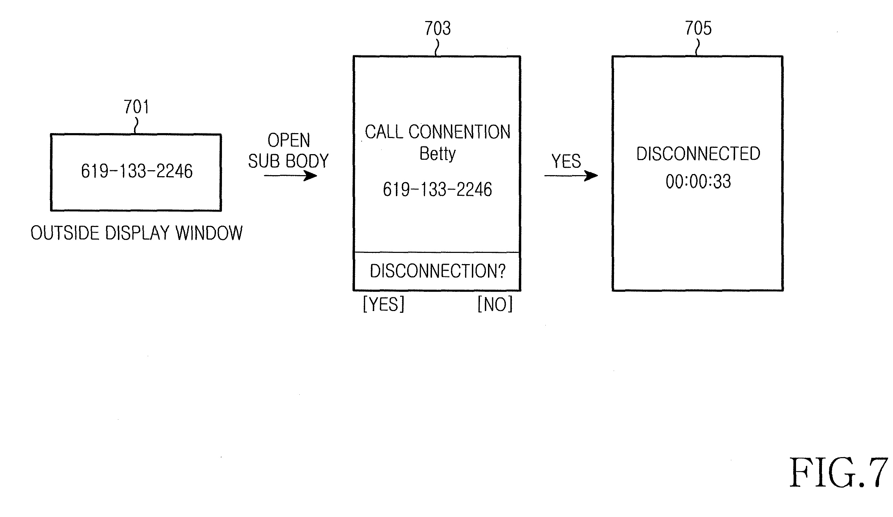

FIG. 7 illustrates a flow of incoming call in a mobile communication terminal according to the present invention. Referring to FIG. 7, when receiving a call, a call number of the caller is displayed in a outer display area 701 of the sub-body 219 and the call number can flash during a predetermined time, e.g., five seconds. Here, when a user opens a sub body of the terminal, call is connected to the caller. A message of "Disconnection?" is displayed in the command area, the user can input the left key to disconnect the call, and thereby the call connection to the caller is ended 705. At this time, call time may be displayed on the display unit 111, the represent of call time can flash during a predetermined time, e.g., five seconds.

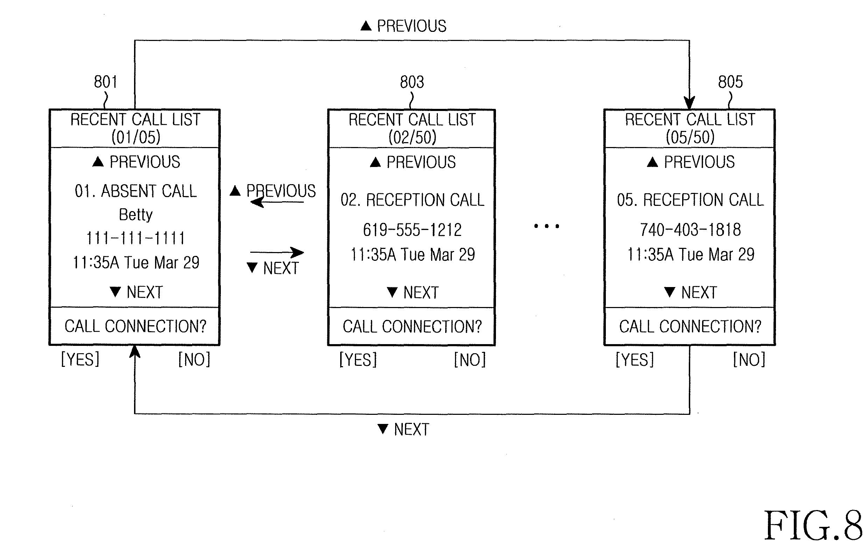

FIG. 8 illustrates a flow of recent call list in a mobile communication terminal according to the present invention. Referring to FIG. 8, when a sub body is in an open position, the latest call phone number 801 is displayed on the display unit 111. At this time, a user presses up/down keys so that previous/next call list can be identified. Here, phone number stored in the call list may be a predetermined number of phone numbers, for example, limited to five. If the stored call list is over the predetermined number of phone numbers, the oldest call list is automatically deleted.

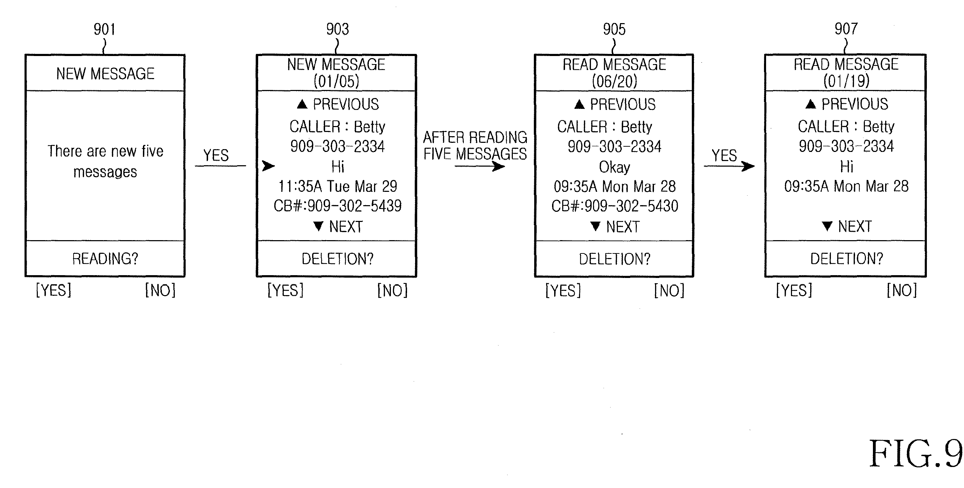

FIG. 9 is an illustration showing a procedure checking a new received message in a mobile communication terminal according to the present invention. Referring to FIG. 9, in case that there is a new received or not read message, "there are new received five messages" is displayed on the display unit 111 (in 901). At this time, a right key can be inputted to perform a function of "reading?" that is displayed in the command area of the display unit 111. If a left key is inputted, it is transferred to next menu. If the right key is inputted, one message among new messages is outputted on the display unit 111 (in 903). At this time, a user can press the left key for deleting the message and the right key for identifying a next message. Following which, if the user has identified all of the new messages (in 905), the new message becomes belonged in read messages. Also, the user can identify previous/next message (in 907) by using up/down keys.

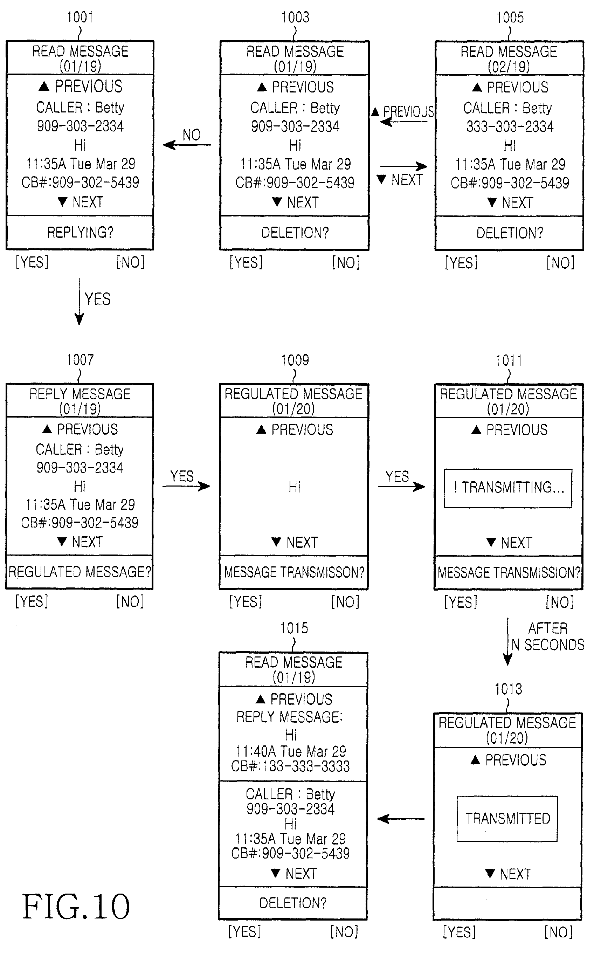

FIG. 10 is an illustration showing a procedure of transmitting a reply message in a mobile communication terminal according to the present invention. Referring to FIG. 10, a read message is displayed on a display unit 111 (in 1001) and a message of "Deletion?" is displayed in command area of the display unit 111. At this time, a user can press an up or down key for reading a previous or next message (in 1003) and a left key representing "Yes" for requesting to perform the deletion function. If the user wants to send a reply message to the message, the user can press a right key representing "No". Here, if the user presses the right key, the terminal recognizes not that the user wants to delete the message but that he wants to send a reply message to the message, and a message of "reply message?" is displayed in command area of the display unit 111, thereby identifying whether the user wants to write the reply message (in 1003). The user can press the left key representing "Yes" for requesting to perform the reply message function. If the user does not want to send the reply message, he can press the right key representing "No". If the user presses the left key, a message of "Regulated message?" is displayed in the command area of the display unit 111 (in 1007). Here, the user presses the left key and selects one message from the regulated message list by using up/down keys. Also, the user presses the right key and can transmit the reply message (in 1011, 1013). After that, the message is overwritten on the reply message in message box (in 1015).

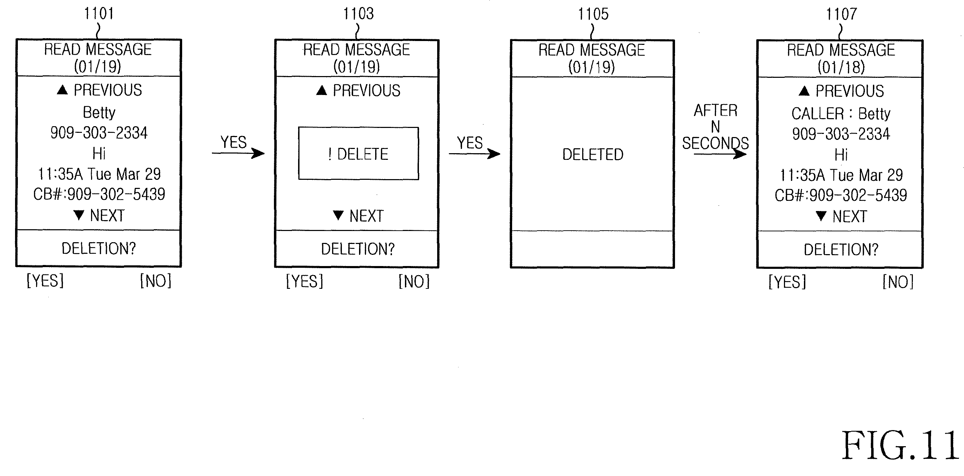

FIG. 11 is an illustration showing a procedure of deleting a message in a mobile communication terminal according to the present invention. Referring to FIG. 11, when displayed a message identified in the display unit 111 (in 1101), a message of "Deletion?" is displayed in the command area and a popup window is displayed for identifying the deletion (in 1103) in case that a right key is pressed by a user (in 1105). Then, if the user identifies the deletion of the message by pressing the left key, the message is deleted (in 1105). After a few seconds, a total count of received message decreases by one (1107).

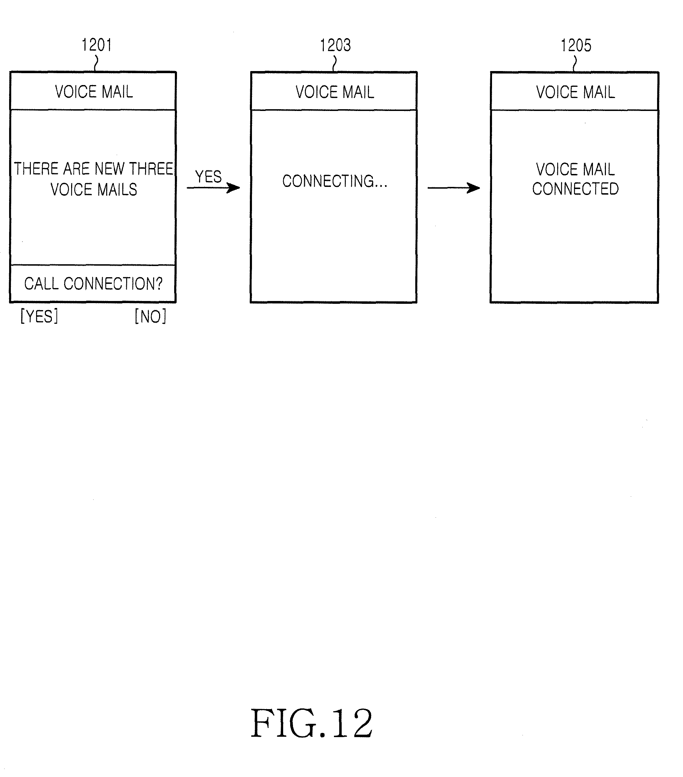

FIG. 12 is an illustration showing reception of voice mail in a mobile communication terminal according to the present invention. Where a new voice mail exists, a message of "There are three voice mails" 1201 is displayed on the display unit 111. Where, however, a new voice mail does not exist, a message such as "There are stored messages" is displayed on the display unit 111. At this time, "Call connection?" is displayed in command area of the display unit 111 and it allows a user to determine whether the user requests a corresponding function after reading the message in the command area. It is possible to request the function by inputting a left key. If the user presses the left key, the terminal attempts to connect to voice mail system (in 1203). When connected to the voice mail system (in 1205), the user can listen to the voice mail and save or delete it.

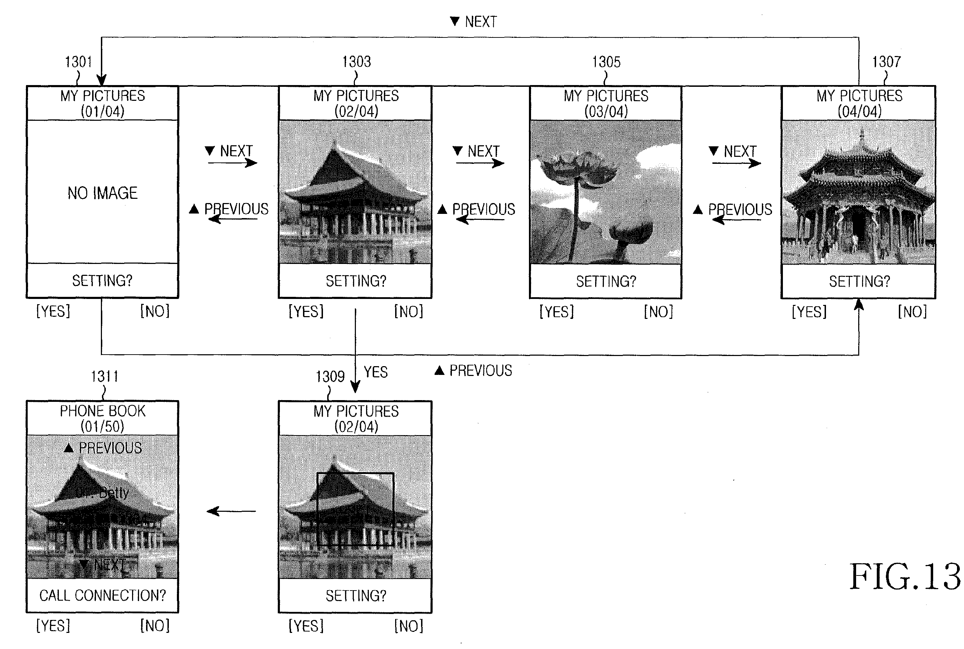

FIG. 13 is an illustration showing a process of setting a background image in a mobile communication terminal according to the present invention. The display unit 111 displays a first image stored in my pictures. At the first time, a default image may be stored in my pictures. Here, the MPU 101 controls displaying a message requesting whether the function of "image setting" is performed, in command area of the display unit 111. The MPU 101 controls displaying a previous or next image according to whether the up or down key is input. If a user presses a left key, a corresponding image is set as the background image (in 1309), an idle screen set the background image is displayed after a few seconds (in 1311).

As another embodiment, in case of voice dial menu, "dial?" may be displayed in command area of the display unit 111 and a user may request a voice dial by pressing a left key. After this, if the user input a voice, the MPU 101 checks whether a phone number stored as the corresponding voice exists and attempts to connect a call to the phone number in voice dial mode.

As another embodiment, in case that there is a missed call, if a user opens a sub body of the terminal, a message such as "There are two missed calls" is displayed on the display unit 111 and a message such as "Check phone number?" is displayed in command area of the display unit 111. At this time, the user can identify the missed calls by inputting a left key. Also, a message of "Call connection?" is displayed in the command area of the display unit 111 and thus notified that the user can make a call to the phone number by inputting the left key.

As described above, the present invention provides a method of providing linear interactive user interface enabling a user to inquire and select (Yes, No) a desired function in a mobile communication terminal. Thus, it is advantageous for user to easily operate a desired function.

The present invention described above is applicable to portable terminals having various functions and no communication function.

While the present invention has been shown and described with reference to certain preferred embodiments thereof, it will be understood by those skilled in the art that various changes in form and details may be made therein without departing from the scope of the present invention as defined by the appended claims.

## Claims

1. A method of providing a user interface in a portable terminal, comprising the steps of:
displaying a function of a first menu when a sub body in an open position; and
carrying out the function when a function performing key is pressed.

2. The method of claim 1, further comprising moving to a second menu when a menu transfer key is pressed and displaying a function of a second menu.

3. The method of claim 1 or 2, further comprising displaying a previous element or next element of the first menu when a list transfer key is pressed after the step of displaying the function of the first menu.

4. The method of claim 2, further comprising displaying a previous element or next element of the second menu when a list transfer key is pressed after the step of displaying the function of the second menu.

5. The method of one of claims 1 to 4, wherein the first menu includes one of at least one phone number, recent call connection list, message, voice mail and voice dial.

6. The method of one of claims 1 to 5, wherein the function performing key is one of a left key, a right key, an up key and a down key.

7. The method of claim 2, wherein the menu transfer key is one of a left key, a right key, an up key and a down key.

8. The method of claim 3, wherein the list transfer key is one of a left key, a right key, an up key and a down key.

9. The method of one of claims 1 to 8, for providing the user interface in a mobile communication terminal.

10. A portable terminal comprising:
a first key representing "Yes" to perform a function of an element of a first menu displayed in a display unit when a sub body is opened; and
a second key representing "No" to not perform the function but to move to a second menu.

11. The terminal of claim 10, further comprising a direction key to scroll a second element of the first menu.

12. The terminal of claim 11, wherein the direction key comprises an up key to scroll to an up position element and a down key to scroll to a down position element with respect to the first element.

13. The terminal of one of claims 10 to 12, being a mobile communication terminal.
